# EUROPÄISCHE PATENTSCHRIFT

(11) **EP 2 246 218 B1**
(45) Veröffentlichungstag und Bekanntmachung des Hinweises auf die Patenterteilung: **19.11.2014**
(21) Anmeldenummer: 10004369.4
(22) Anmeldetag: 24.04.2010
(51) Int. Cl.: B60R 7/00

(54) **Gepäcknetz mit Rahmen, insbesondere Fahrzeug-Gepäcknetz, sowie Verfahren und Vorrichtung zu dessen Herstellung**
Luggage net with frame, in particular vehicle luggage net, and method and device for producing same
Filet à bagages doté d'un cadre, notamment filet à bagages de véhicule ainsi que procédé et dispositif destinés à sa fabrication

(30) Priorität: 28.04.2009 DE 102009019171
(43) Veröffentlichungstag der Anmeldung: 03.11.2010
(73) Patentinhaber: Nölle-Pepin Grundstücksgemeinschaft Steinweg 34 GbR, 58322 Schwelm (DE)
(72) Erfinder: Nachbaur, Jörg, 6844 Altach (AT)
(74) Vertreter: Lelgemann, Karl-Heinz

(56) Entgegenhaltungen:
- DE-A1- 10 247 585
- DE-U1-202007 014 706

## Beschreibung

Die Erfindung bezieht sich auf ein Verfahren zur Herstellung eines Gepäcknetzes, insbesondere eines Fahrzeug-Gepäcknetzes, und auf eine Vorrichtung zu dessen Durchführung nach dem Oberbegriff des Patentanspruchs 7.

Ein Gepäcknetz, insbesondere für Fahrzeuge, beinhaltet einen Rahmen, insbesondere aus Kunststoff, welcher zur Aufnahme und Befestigung eines Netzes ausgebildet ist, wobei das Netz bevorzugt aus einem Gewirk, insbesondere aus Kunststoff und /oder Baumwolle, hergestellt ist.

Ein derartiges Fahrzeug-Gepäcknetz ist insbesondere an der Innenausstattung, zum Beispiel im Tunnelbereich, an der Seitenverkleidung, zum Beispiel der Tür, oder an der Rückseite einer Rückenlehne eines Fahrzeugsitzes in Fahrzeugen od.dgl. befestigbar und dient zur Aufnahme und sicheren Aufbewahrung von Gegenständen, wie zum Beispiel ein Gepäckstück, diverse Gebrauchsgegenstände, od.dgl.

Ein bekannter Rahmen mit einem Gewirk in Form eines Netzes ist in der DE 42 28 260 A1 offenbart, wobei sich ein Haltedraht durch die Außenschlaufen eines Netzes erstreckt und in zugeordneten Druckaufnahmen auf der Unterseite eines U-förmig ausgebildeten Profilrahmens einrastet. Das Netz weist an seiner nach oben offenen Seite des Rahmens eine Zugkordel auf, welche sich durch die Außenschlaufen des Netzes erstreckt und an ihren jeweiligen Enden Haltevorrichtungen zur Befestigung auf der Unterseite des Rahmens aufweist. Der Profilrahmen wird mittels an der Unterseite des Rahmens vorgesehener Gewindehülsen mittels Schrauben an einer dafür vorgesehenen Stelle in einem Fahrzeug, wie zum Beispiel auf der Rückseite eines Fahrzeugsitzes, befestigt.

Ein wesentlicher Nachteil eines derartigen Rahmensystems ist, dass ein Haltedraht und Clipse in den Außenschlaufen eines Netzes benötigt werden sowie eine Zugkordel, was zu einer wesentlichen Erhöhung der Herstellungskosten des Fahrzeug-Gepäcknetzes führt.

Eine weitere Netzanordnung zur Montage an einem Rahmen ist in der DE 201 17 369 U1 offenbart, wobei das hier zu befestigende Netz mittels einem die Außenschlaufen durchsetzenden Drahtteil auf der Unterseite eines Rahmens geklemmt wird und das an der offenen Seite des Netzes eingelegte Zugglied mit seinen Enden in zugeordneten Übergangsteilen befestigt ist, welche jeweils auf die Enden des Drahtteils gesteckt sind.

Auch hier liegt der wesentliche Nachteil darin, dass ein Drahtteil in den Außenschlaufen eines Netzes benötigt wird sowie ein Zugglied, was zu einer wesentlichen Erhöhung der Herstellungskosten und des Gewichtes des Fahrzeug-Gepäcknetzes führt.

Die DE 20 2007 014 706 U1 offenbart ein derartiges Fahrzeug-Gepäcknetz mit U-förmigem Grundrahmen, der an ein Fahrzeug-Innenteil angebracht werden kann, wobei auf diesem Grundrahmen ein Zwischenrahmen in Form eines Netzträgers durch Klemm-, Schraub-, Niet-, Schweiß- oder Klebeverbindung befestigt ist, und wobei mit diesem Zwischenrahmen ein Netz mittels Schweiß- und/oder Klebeverbindung fest verbunden ist oder zwischen zwei dieser Zwischenrahmen ein Netz mittels Klemmverbindung geklemmt gehalten ist.

Nachteil ist, dass hier ein Zwischenrahmen zwischen Grundrahmen und Netz vorgesehen ist, was zu einer wesentlichen Erhöhung der Herstellungskosten des Fahrzeug-Gepäcknetzes führt.

Die DE 20 2004 018 946 U1 offenbart ein Fahrzeug-Gepäcknetz mit U-förmigen Rahmen, der an ein Fahrzeug-Innenteil angebracht werden kann, wobei auf diesem Rahmen Haltestifte vorhanden sind, die einerseits teilweise zur Befestigung am Fahrzeug-Innenteil dienen und andererseits zum Aufspannen eines Netzes durch Einfädeln der Haltestifte in zugeordnete randseitige Öffnungen im Netz. Auf das Netz und die Haltestifte ist ein Verstärkungsband aufgelegt und durch Schweißen oder Kleben mit dem Netz fest verbunden, nicht aber mit dem Rahmen selbst. Daher erfolgt die Verbindung zwischen dem Rahmen und dem Netz nur über die Haltestifte und daher liegt keine stoffschlüssige, sondern nur eine formschlüssige Verbindung vor, solange das Fahrzeug-Gepäcknetz noch nicht mit dem Fahrzeug-Innenteil verbunden ist und damit das Netz zwischen Rahmen und Fahrzeug-Innenteil reibschlüssig geklemmt ist.

Nachteil ist einerseits, dass es zu Montagefehlern kommen kann, da das Netz während der Montage des Fahrzeug-Gepäcknetzes auf das Fahrzeug-Innenteil nicht fest mit dem Rahmen verbunden ist. Nachteil andererseits ist, dass aus Kosten- und Festigkeitsgründen nicht beliebig viele durchmesserkleine Haltestifte am Rahmen vorgesehen werden können, so dass der Rand des Netzes keine optimal gespannte geradlinige Form aufweist, sondern zwischen den Haltestiften ungespannte bogenförmige Netzbereiche vorliegen. Weiterer Nachteil ist, dass auf dem Rahmen eine Vielzahl von Haltestiften zum Aufspannen des Netzes vorhanden sein müssen, was zu einer wesentlichen Erhöhung der Herstellungskosten des Fahrzeug-Gepäcknetzes führt.

Aus der DE 102 47 585 A1 ist ein in bestimmter Weise ausgestaltetes Verfahren zur Herstellung eines Gepäcknetzes bekannt. Zu dem mit dem bekannten Verfahren hergestellten Gepäcknetz gehört ein Rahmen, an dem ein Netz durch eine stoffschlüssige Verbindung, die aus Befestigungspunkten besteht und linienförmig sein kann, befestigt ist. Des Weiteren ist dieser Rahmen mittels Befestigungselementen in Form von Domen mit einem eine Auflagefläche aufweisenden Gegenstück verbindbar. Bei diesem Verfahren wird das Gepäcknetz während des mittels einer Sonotrode durchgeführten Schweißvorgangs in eine gewünschte Position verbracht, indem es vorgespannt und über an einem Rahmen angebrachte Haken, Greifer od.dgl. angeordnet wird. Wenn das Gepäcknetz mittels des Rahmens an der Anlagefläche angebracht werden soll, dient der Rahmen selber zum Positionieren und Vorspannen des Gepäcknetzes.

Ausgehend vom Stand der Technik gemäß der DE 102 47 585 A1 liegt die Aufgabe der Erfindung darin, ein Verfahren und eine Vorrichtung zur Herstellung eines Gepäcknetzes, insbesondere Fahrzeug-Gepäcknetzes, zur Verfügung zu stellen, mittels denen ein derartiges Gepäcknetz wesentlich kostengünstiger, aber auch mit höherer Präzision und Sicherheit, herstellbar ist, wobei das hergestellte Gepäcknetz besser an einem Gegenstück, insbesondere Fahrzeug-Innenteil, montierbar sein soll.

Zur Lösung dieser Aufgabe werden die Merkmale der unabhängigen Patentansprüche 1 und 7 vorgeschlagen, wobei vorteilhafte Weiterbildungen Gegenstand der Unteransprüche sind.

Wesentlich für das entsprechend hergestellte Gepäcknetz ist, dass das Netz stoffschlüssig am Rahmen befestigt ist.

Stoffschlüssig heißt, dass die Werkstoffe von Netz und Rahmen bei deren Verbindungsherstellung ineinander fließen oder mindestens einseitig in den anderen Werkstoff diffundieren, oder dass die Adhäsionskräfte erhöht werden. Hierzu wird das Schmelzschweißen (auch durch Ultraschall), Pressschweißen, Löten, Einschmelzen (auch Anspritzen oder Umspritzen) oder Kleben eingesetzt - einzeln oder in beliebiger Kombination miteinander.

Vorteil ist, dass die formschlüssigen Halteelemente für das Netz am Rahmen völlig entfallen können, ebenso ein Zwischenrahmen oder ein Spanndraht, und das Netz direkt auf dem Rahmen stoffschlüssig befestigt wird.

Das Material des Rahmens ist insbesondere im Wesentlichen Kunststoff, z.B. ABS, ebenso das Material des Netzes, z.B. PA, auch aus dem gleichen Kunststoff.

Der Rahmen ist bogen-, rechteck- oder trapezförmig und insbesondere U-förmig und enthält einen Rahmen-Basisschenkel, an dessen beiden freien Enden sich je ein Rahmen-Seitenschenkel auf der gleichen Seite des Rahmen-Basisschenkels erstreckt, so dass ein "U" entsteht, das aber nicht zwangsläufig streng symmetrisch sein muss.

Das Querschnittsprofil des Rahmens ist ebenso bogenförmig bzw. U-förmig mit ebenso einem Profil-Basisschenkel, an dessen beiden freien Enden sich je ein Profil-Seitenschenkel auf der gleichen Seite des Profil-Basisschenkels erstreckt, so dass ein "U" entsteht, das aber nicht zwangsläufig streng symmetrisch sein muss.

Bevorzugt ist das Netz auf der Innenseite des Profil-Basisschenkels zwischen den beiden seitlichen Basis-Seitenschenkeln und zwischen den beiden seitlichen Profil-Seitenschenkeln unlösbar stoffschlüssig aufgebracht.

Das Netz selbst besteht insbesondere aus zwei Serien von zueinander parallelen Garnelementen, die sich gegenseitig kreuzen, wobei die Garnelemente an ihren Kreuzungspunkten miteinander verbunden sind. Das Netz ist mindestens an seinem oberen Ende, welches im fertigen Zustand des Gepäcknetzes insbesondere für Fahrzeuge zwischen den beiden Rahmen-Seitenschenkeln liegt, mit einem elastischen Bund versehen.

Das erfindungsgemäße Verfahren enthält die im Patentanspruch 1 angegebenen Verfahrensschritte.

Vorteilhafte Weiterbildungen des erfindungsgemäßen Verfahrens ergeben sich aus den Unteransprüchen 2 bis 6.

Wird ein Klebstoff als stoffschlüssiges Verbindungsmittel zwischen Netz und Rahmen vorgesehen, so ist ein möglicher Arbeitsablauf wie folgt:
Beim Unterteil (UT) wurden an der Einlegekontur Stifte zum Einfädeln des Netzes angebracht. So muss das Netz nicht außerhalb des Prototypenwerkzeuges eingerichtet und gespannt werden. Das bringt eine Materialeinsparung beim Netz von ca. 30 %. Außerdem wurde beim UT Material freigespart, damit es leichter wird. Als nächster Schritt wird das Oberteil durch eine Vorrichtung ersetzt, welche das Netz in der richtigen Position in den im Unterteil eingelegten Rahmen klemmt. Dabei wird das Netz am Boden des Rahmens links und rechts an die Wand geklemmt. Durch die geringe Wandstärke der Vorrichtung vergrößert sich die Klebespur auf ca. 10 mm. Die Dome sind nach innen freigestellt, so dass die Klebespur durchgezogen werden kann.

### Arbeitsablauf:

1. Rahmen in Werkzeug legen, Primern incl. Verweilzeit;
2. Netz einfädeln, aufspannen und positionieren;
3. Gummizug am Anfang und Ende vorkleben;
4. Maske runterfahren und fixieren;
5. kleben;
6.heißtrennen;
7. entformen und verpacken.

Die erfindungsgemäße Vorrichtung hat die im Patentanspruch 7 angegebenen Merkmale.

In die Haltestiftreihe werden dann die Maschen des Netzes des Gepäcknetzes, insbesondere für Fahrzeuge, eingefädelt und somit das Netz auf den Rahmen gespannt, wobei der Rahmen auf der Oberfläche des Unterteils liegt und sich auf der Innenseite der Anlagefläche abstützt.

Die Vorrichtung weist daher die der boden-, rechteck- oder trapezförmigen Form des Rahmens angepasste Anlagefläche für den Rahmen auf, auf dessen Außenseite Stifte zum Einfädeln der Maschen des Netzes und damit Spannen des Netzes über den Rahmen vorgesehen sind, so dass anschließend das Netz auf dem Rahmen in Position gehalten wird und stoffschlüssig befestigt werden kann.

Durch die Reihe von Haltestiften auf der Außenfläche des Unterteils können die Haltestifte für das Netz auf dem Rahmen entfallen, wodurch erhebliche Kosten eingespart werden. Auf dem Rahmen selbst sind dann nur noch die Haltstifte für das Anbringen auf dem Fahrzeugteil vorhanden, die als "Dome" bezeichnet werden, wobei pro Rahmen nur etwa sechs dieser Dome vorhanden sein müssen. Im Gegensatz hierzu waren bei der DE 20 2004 018 946 U1 zwischen den langen Haltestiften für die Netzhalterung und für das Anbringen auf dem Fahrzeug weitere drei kurze Haltestifte ausschließlich für die Netzhalterung vorgesehen, so dass jetzt mit der vorliegenden Erfindung etwa 75 % der Stifte am Rahmen und damit deren Konstruktion im Werkzeug und deren Material am Rahmen eingespart werden können.

Vorteilhafte Weiterbildungen der erfindungsgemäßen Vorrichtung ergeben sich aus den Unteransprüchen 8 bis 11.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1: das Gepäcknetz, insbesondere für Fahrzeuge, von der Seite des Fahrzeugteils aus gesehen;
- Figur 2: vergrößerte Darstellung eines Schnittes entlang der Hochachse (in VerschiebeRichtung des Ober- und/oder Unterteils) durch das erfindungsgemäße Montage-Werkzeug;
- Figuren 3 bis 5: das Auflegen des Netzes auf den auf dem Unterteildes Werkzeugs befindlichen Rahmen und schrittwei-ses Einfädeln des Netzes in die Haltstifte;
- Figuren 6 bis 8: das schrittweise Zusammenkleben von Netz undRahmen zwischen Ober- und Unterteil des Werkzeugs;
- Figur 9: das Abschneiden des überstehenden Materials des Netzes aus dem Oberteil des Werkzeugs; und
- Figur 10: das Gepäcknetz nach dem Abschneiden und Hochfahren des Oberteils des Werkzeugs.

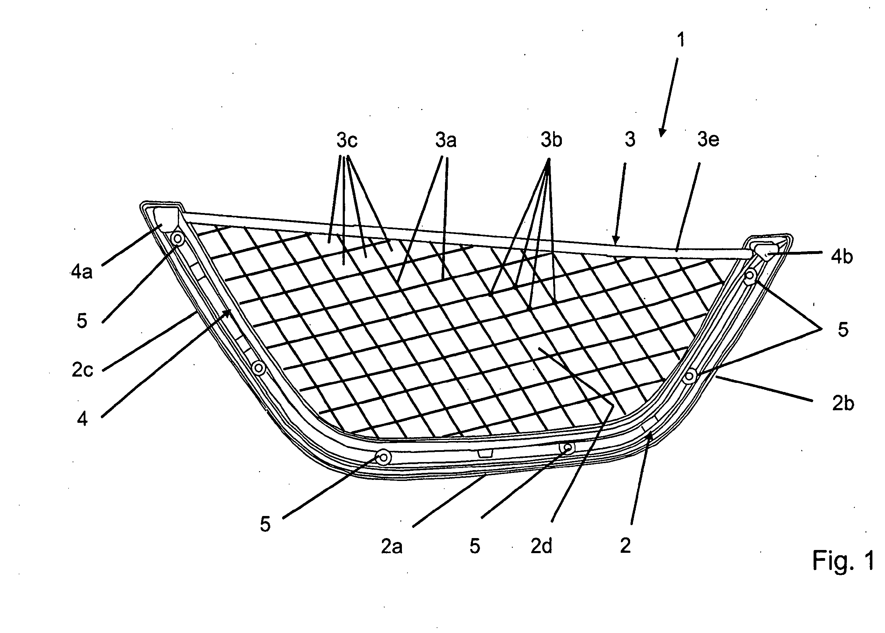

Figur 1 zeigt nun das Fahrzeug-Gepäcknetz 1 von der Rückseite her, also aus der Ansicht des Fahrzeug-Innenteils, mit dem das Fahrzeug-Gepäcknetz 1 befestigt wird.

Der Rahmen ist über sechs Stück stiftförmige Dome 5 mit einem Fahrzeug-Innenteil verbindbar.

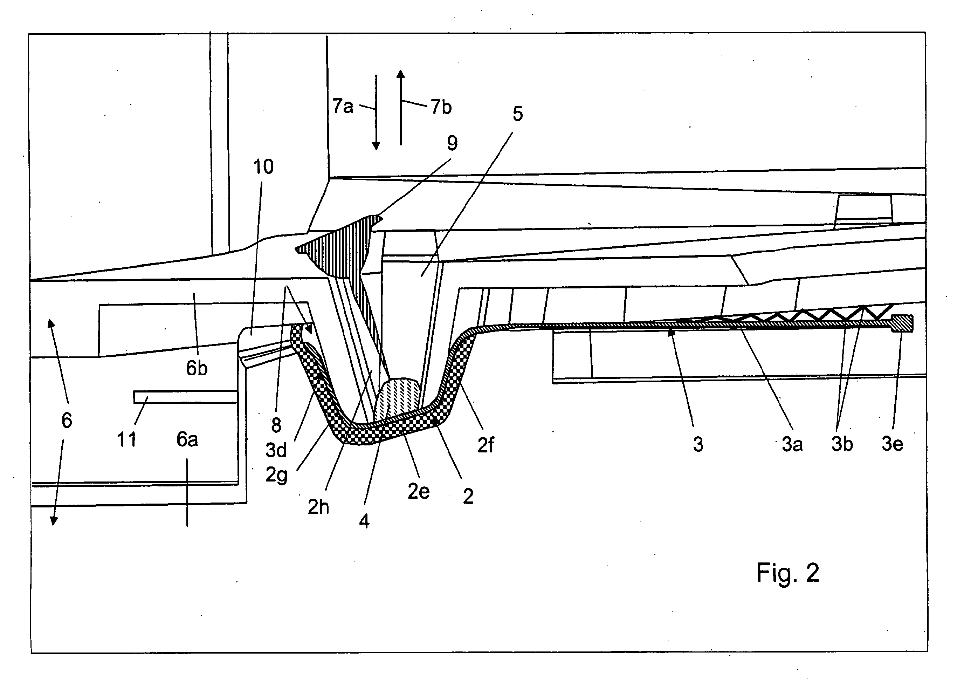

Das Fahrzeug-Gepäcknetz 1 besteht aus Rahmen 2, Netz 3 und Kleberaupe 4, wobei das Netz 3 aus teils parallelen teils sich kreuzenden Garnsträngen 3a besteht, die an den Kreuzungspunkten 3b miteinander verbunden sind und somit Maschen 3c bilden, wobei am unteren freien Ende 3d des Netzes 3 kein Bund, jedoch am oberen freien Ende des Netzes 3 sich ein elastischer Bund 3e befindet. Netz 3 und Rahmen 2 sind über die Kleberaupe 4 miteinander unlösbar stoffschlüssig verbunden, wobei größer dimensionierte Anfangs- 4a und Endklebepunkte 4b vorgesehen sind, die sich auch formschlüssig im Material im Profilinnenraum 2h (siehe Figur 2) des Rahmens 2 einbetten und somit eine bessere Verbindung bieten.

In Figur 2 ist nun der Rahmen 2 genauer dargestellt, der aus einem Rahmen-Basisschenkel 2a und daran endseitig ansetzenden Rahmen-Seitenschenkeln 2b und 2c besteht, die unterschiedliche Längen und Winkel aufweisen und zwischen den Schenkeln 2a, 2b, 2c ein Rahmen-Innenraum 2d gebildet ist, in welchem das Netz 3 aufgespannt ist.

In Figur 2 ist weiterhin dargestellt, dass das Profil des Rahmens 2 aus einem Profil-Basisschenkel 2e und daran endseitig ansetzenden Profil-Seitenschenkeln 2f und 2g besteht, die unterschiedliche Längen und Winkel aufweisen und zwischen den Schenkeln 2e, 2f, 2g ein Profil-Innenraum 2h gebildet ist, in welchem das untere freie Ende 3d des Netzes 3 eingebracht und dort mit der Oberfläche des Profil-Basisschenkels 2e mittels der Kleberaupe 4 stoffschlüssig festgelegt ist.

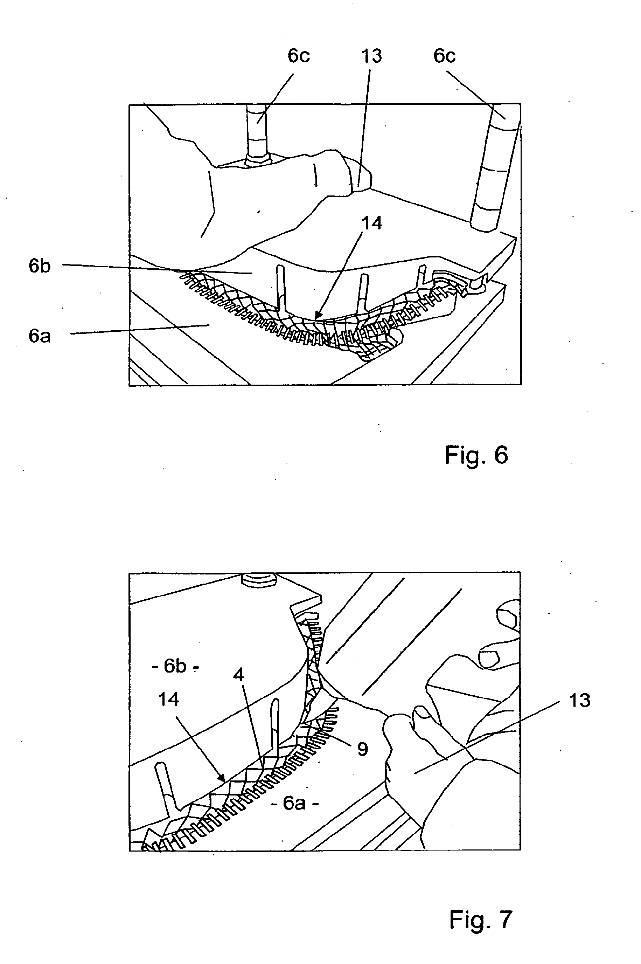

Figur 2 stellt ebenso das Montage-Werkzeug 6 dar, das aus einem Werkzeug-Unterteil 6a und einem darüber befindlichen Werkzeug-Oberteil 6b besteht, wobei das Werkzeug-Oberteil 6b auf das Werkzeug-Unterteil 6a in Zustellrichtung 7a zustellbar und von diesem in Wegstellrichtung 7b wegstellbar ist, insbesondere über eine hier nicht gezeigte Säulenführung 6c (siehe Figur 6).

Das Werkzeug-Unterteil 6a besitzt eine Ausnehmung 8, die der Außenkontur des Rahmens 2 entspricht, so dass der Rahmen 2 dort eingelegt formschlüssig ist.

Das untere Ende 3d des Netzes 3, das dem Bund 3e gegenüberliegt, ist im Profil-Innenraum 2h des Rahmens 2 eingelegt und liegt dort auf den Schenkeln 2e - 2g auf. Das Werkzeug-Oberteil 6b ist derart auf dem Werkzeug-Unterteil 6a aufgebracht, dass das Netz 3 auf dem Rahmen 2 in der Lage fixiert wird. Das untere Ende 3d des Netzes 3, das dem Bund 3e gegenüberliegt, ist auf dem Basisschenkel 2e mit der Kleberaupe 4 mit diesem unlösbar stoffschlüssig verbunden. Die Kleberaupe 4 wird durch in der Länge variierbare Düsen 9 aufgebracht, wie in Figur 2 dargestellt ist.

Aus Figur 1 und 2 ist ersichtlich, dass die Kleberaupe 4 zwischen dem inneren Seitenschenkel 2f (Figur 2) oder alternativ dem äußeren Seitenschenkel 2g (Figur 2) des Rahmens 2 und den auf dem Basisschenkel 2e befindlichen stiftförmigen Domen 5 gezogen ist, so dass der Rahmen nach dem Aufbau des Fahrzeug-Gepäcknetzes 1 auf ein Fahrzeug-Innenteil (nicht gezeigt) durch die Kleberaupe 4 nach unten hin abgedichtet ist.

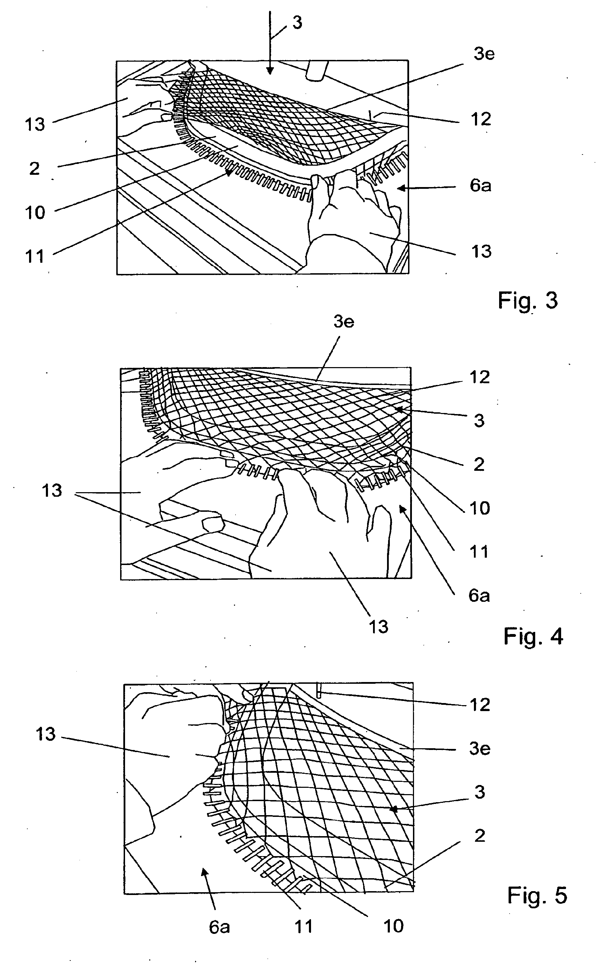

Figuren 3 bis 10 zeigen nun die einzelnen Schritte des Verfahrens zur erfindungsgemäßen Montage des Netzes 3 auf dem Rahmen 2, was zum Endprodukt des Fahrzeug-Gepäcknetzes 1 führt. Auch sind die wichtigen Bauteile der Vorrichtung für das Herstellverfahren des Fahrzeug-Gepäcknetzes 1 gezeigt.

Figuren 3 bis 5 zeigen das Auflegen und Einfädeln des Netzes auf dem auf dem Oberteil des Werkzeugs befindlichen Rahmen. Hierbei besitzt das Unterteil 6a des Werkzeugs 6 eine bogenförmige Anlagekontur 10, die der Bogenform des Rahmens 2 entspricht, wobei die Anlagekontur 10 sich in Richtung Oberteil 6b des Werkzeugs 6 erstreckt. An der Innenseite der Anlagekontur 10 wird dann der Rahmen 2 bündig angelegt und liegt auf der Oberseite des Unterteils 6a in deren Ausnehmung 8 auf. Nun wird das Netz 3 auf dem auf dem Unterteil 6a befindlichen Rahmen 2 aufgelegt und auf den Haltestiften 11 der Maschen 3c aufgefädelt sowie auf den Hilfsstiften 12, die sich oberhalb des Innenraums 2d des Rahmens 2 auf der Oberfläche des Unterteils 6a des Werkzeugs 6 befinden.

Zunächst wird daher nach Figur 3 das Netz 3 in Grundposition über den Rahmen 2 in Form etwa eines Rechtecks gebracht; anschließend nach Figur 4 und 5 wird das Netz in der Mitte nachgezogen und in die einzelnen Haltestifte 11 und ggf. Hilfsstifte 12 eingefädelt.

Figuren 6 bis 8 zeigen das Verbinden von Netz 3 und Rahmen 2, welche innerhalb des mittels der beiden Säulenführungen 6c aufeinander zugefahrenen Ober- 6b und Unterteils 6a des Werkzeugs 6 positionsstabil eingeklemmt werden. Der untere Rand des Oberteils 6b bildet hierbei zusammen mit dem oberen Rand des Anlageprofils 10 des Unterteils 6a eine Maske 14, entlang der die Kleberaupe 4 mittels der Düse 9 von Hand 13 oder per Roboter (nicht gezeigt) gezogen werden kann.

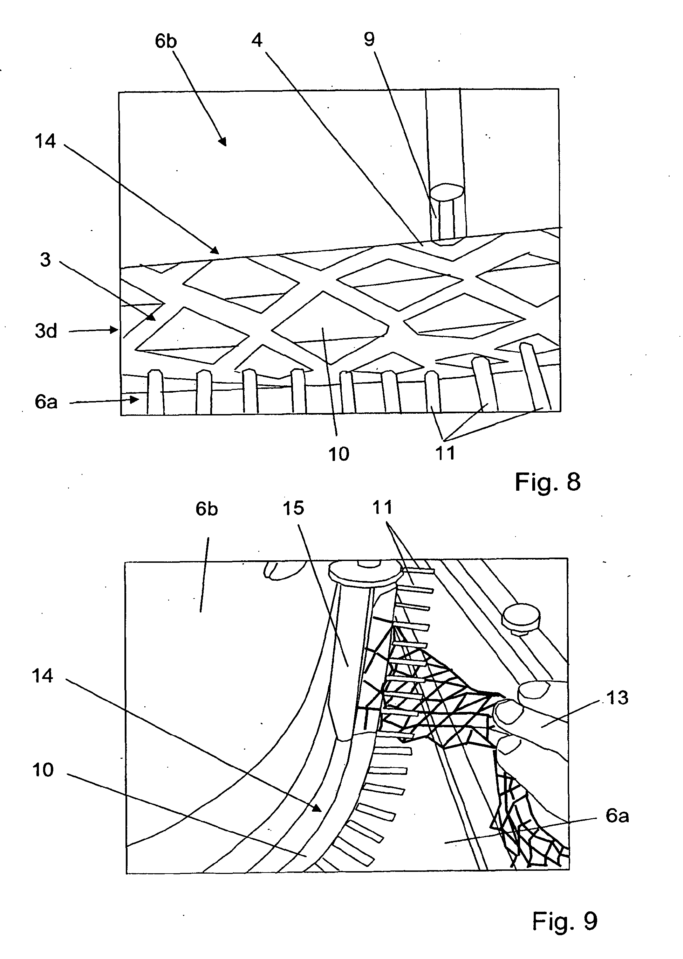

Figur 8 zeigt eine vergrößerte Darstellung im Bereich der Maske 14, wobei erkennbar ist, dass der Spalt zwischen Anlageprofil 10 des Unterteils 6a und dem unteren Rand des Oberteils 6b vollkommen mit der Kleberaupe 4 aufgefüllt ist/wird.

Figur 9 zeigt, dass der überschüssige Rand, der von der Maske 14 hervorsteht, durch thermisches Trennen mittels Lötkolben 15 vom Netz 3 und damit vom Gepäcknetz 1 abgetrennt wird und damit das Gepäcknetz 1 frei von den Haltestiften 11 wird.

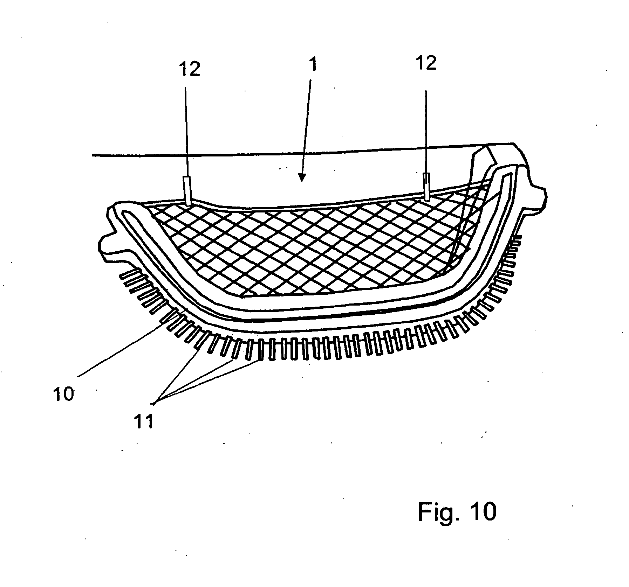

Figur 10 zeigt die Situation nach der Figur 9 mit abgenommenem Oberteil 6b, wobei das bereits fertige Gepäcknetz 1 nur noch in der Ausnehmung 8 des Unterteils 6a liegt sowie am oberen Bund 3e des Netzes 3 durch die zwei Hilfsstifte 12 auf dem Unterteil 6a gehalten wird.

## Patentansprüche

1. Verfahren zur Herstellung eines Gepäcknetzes (1) mit einem Rahmen (2), an dem ein Netz (3) durch eine stoffschlüssige Verbindung (4) befestigt und der mittels Befestigungselementen (5) mit einem Gegenstück verbindbar ist, bei welchem Verfahren folgende Schritte durchlaufen werden:
a) Einlegen des Rahmens (2) in ein Anlageprofil (10) eines Unterteils (6a) eines Montage-Werkzeugs (6);
b) Auflegen des Netzes (3) auf den Rahmen (2) und Einfädeln der Netzmaschen (3c) im Bereich des Rahmens (2) auf Haltestifte (11) auf dem Anlageprofil (10) des Montage-Werkzeugs (6) oder Einfädeln der Netzmaschen (3c) im Bereich des Rahmens (2) auf die Haltestifte (11) auf dem Anlageprofil (10) des Montage-Werkzeugs (6) und Auflegen des Netzes (3) auf den Rahmen (2);
c) Aufsetzen eines das Unterteil (6a) ergänzenden Oberteils (6b) des Montage-Werkzeugs (6) auf das Unterteil (6a), so dass Netz (3) und Rahmen (2) in ihrer Relativposition zueinander fixiert werden;
d) punktuelles, streifenweises oder durchgehendes stoffschlüssiges Verbinden von Netz (3) und Rahmen (2) entlang einer Maske (14) zwischen Oberteil (6b) und Anlageprofil (10) des Unterteils (6a) des Werkzeugs (6);
e) Abheben des Oberteils (6b) vom Unterteil (6a) des Montage-Werkzeugs (6);
f) Entnehmen des teilfertigen oder fertigen Gepäcknetzes (1) aus dem Werkzeug (6).

2. Verfahren nach Anspruch 1, bei dem bei Schritt a) das Anlageprofil (10) des Unterteils (6a) des Montage-Werkzeugs (6) mit einer Ausnehmung (8) verwendet wird.

3. Verfahren nach Anspruch 1 oder 2, bei dem zwischen den Schritten a) und b) oder vor dem Schritt a) ein Aufbringen eines Haftvermittlers (Primer) vorgesehen ist, auf mindestens die Teile der Oberfläche des Rahmens (2), die mit dem Netz (3) verbunden werden sollen.

4. Verfahren nach einem der Ansprüche 1 bis 3, bei dem das Einfädeln bei Schritt b) ein Einfädeln auf als stiftförmige Dome (5) ausgebildete Befestigungselemente (5) auf dem Rahmen (2) zur Befestigung am Fahrzeug, insbesondere Fahrzeug-Innenteil beinhaltet, ebenso ein Einfädeln auf Hilfsstifte (12) nicht im Bereich des Rahmens (2), z.B. im Bereich eines oberen Bundes (3e) des Netzes (3) zwischen Rahmen-Seitenbügeln (2b, 2c) des U-förmigen Rahmens (2).

5. Verfahren nach einem der Ansprüche 1 bis 4, bei dem bei Schritt c) das Oberteil (6b) des Montage-Werkzeugs (6) derart in das Unterteil (6a) des Montage-Werkzeugs (2) gebracht wird, dass das Netz (3) mindestens teilweise auf der Oberfläche eines inneren Profil-Basisschenkels (2e) zwischen zwei Profil-Seitenschenkeln (2f, 2g) in einem Profil-Innenraum (2h) satt aufliegt oder sich zumindest in geringem Abstand darüber befindet.

6. Verfahren nach einem der Ansprüche 1 bis 5, bei dem zwischen den Schritten d) und e) oder nach dem Schritt e) ein Abtrennen des überschüssigen Materials (3d) des Netzes (3) vorgesehen ist, welches sich außerhalb eines Rahmen-Innenraums (2d) des Rahmens (2) befindet, wobei bevorzugt ein Abschneiden unter Wärmeeinfluss erfolgt, so dass die Trennstelle gleichzeitig leicht geschmolzen wird und **dadurch** die Fasern des Netzes (3) miteinander verbunden werden.

7. Vorrichtung zur Durchführung des Verfahrens nach einem der Ansprüche 1 bis 6, **dadurch gekennzeichnet, dass** die Vorrichtung, d.h. das Montage-Werkzeug (6), ein Ober-(6b) und ein Unterteil (6a) aufweist, welche derart zueinander verfahrbar sind, dass die beiden zugewandten Oberflächen einander berühren oder nahezu berühren, dass das Unterteil (6a) eine bogen-, rechteck- oder trapezförmige, der Form des Rahmens (2) des Gepäcknetzes (1) angepasste Anlagefläche (10) für den Rahmen (2) auf seiner dem Oberteil (6b) zugewandten Oberfläche aufweist, **und dass** an der dem Rahmen (2) abgewandten Außenfläche dieser Anlagefläche eine Reihe hintereinander liegender Haltestifte (11) angeordnet sind, die etwa parallel zur Oberfläche des Unterteils (6a), insbesondere horizontal oder mit ihrem freien Ende nach unten auf die Oberfläche des Unterteils (6a) zeigend, sich erstrecken.

8. Vorrichtung nach Anspruch 7, mit einer Säulenführung (6c), durch die das Oberteil (6b) und das Unterteil (6a) des Montage-Werkzeugs (6) zueinander verfahrbar sind.

9. Vorrichtung nach Anspruch 7 oder 8, bei der an der dem Rahmen (2) zugewandten Innenfläche dieser insbesondere bogenförmigen Anlagefläche (10) eine Ausnehmung (8) zur formschlüssigen Aufnahme des Rahmens (2) vorgesehen ist.

10. Vorrichtung nach einem der Ansprüche 7 bis 9, bei der etwa so viele Haltestifte (11) an der dem Rahmen (2) abgewandten Außenfläche der insbesondere bogenförmigen Anlagefläche (10) vorgesehen sind, wie etwa Netzmaschen (3c) des Netzes (3) in diesem Bereich vorhanden sind.

11. Vorrichtung nach einem der Ansprüche 7 bis 10, bei der oberhalb des Bundes (3e) des Netzes (3) auf dem Unterteil (6a) des Montage-Werkzeugs (6) Hilfsstifte (12) vorhanden sind, auf denen der Bund (3e) oder die Netzmaschen (3c) im Bereich des Bundes (3e) aufgefädelt und damit der Bund (3e) gespannt wird.

## Claims

1. A method for the manufacture of a luggage net (1) with a frame (2) onto which a net (3) is attached by means of a material bond (4), and which by means of attachment elements (5) can be connected with a corresponding part, in which method the following steps are executed:
a. Insertion of the frame (2) into a locating profile (10) of a lower part (6a) of an assembly tool (6);
b. Laying of the net (3) onto the frame (2) and threading of the net meshes (3c) in the region of the frame (2) onto holding pins (11) on the locating profile (10) of the assembly tool (6), or threading of the net meshes (3c) in the region of the frame (2) onto the holding pins (11) on the locating profile (10) of the assembly tool (6) and laying of the net (3) onto the frame (2);
c) Placement of an upper part (6b) of the assembly tool (6), which complements the lower part (6a), onto the lower part (6a), so that net (3) and frame (2) are fixed in their positions relative to one another;
d) Point-wise, strip-wise or continuous material bonding of net (3) and frame (2) along a mask (14) between upper part (6b) and locating profile (10) of the lower part (6a) of the tool (6);
e) Lifting of the upper part (6b) from the lower part (6a) of the assembly tool (6);
f) Removal of the part-finished, or finished, luggage net (1) from the tool (6).

2. The method in accordance with Claim 1, in which in step a) the locating profile (10) of the lower part (6a) of the assembly tool (6) is used with a recess (8).

3. The method in accordance with Claim 1 or 2, in which between steps a) and b), or before step a), an application of a primer is provided on at least the parts of the surface of the frame (2) that are to be bonded with the net (3).

4. The method in accordance with one of the Claims 1 to 3, in which the threading process in step b) includes a threading onto attachment elements (5) on the frame (2) designed as pin-shaped domes (5) for purposes of attachment to the vehicle, in particular a vehicle interior part, also a threading onto ancillary pins (12) not in the region of the frame (2), e.g. in the region of an upper band (3e) of the net (3) between side brackets (2b, 2c) of the U-shaped frame (2).

5. The method in accordance with one of the Claims 1 to 4, in which in step c) the upper part (6b) of the assembly tool (6) is brought into the lower part (6a) of the assembly tool (2) such that the net (3) lies at least partially solidly on the surface of an inner profile base arm (2e) between two profile side arms (2f, 2g) in a profile interior space (2h), or is at least located at a small separation distance above the latter.

6. The method in accordance with one of the Claims 1 to 5, in which between steps d) and e), or after step e), a detachment of the excess material (3d) of the net (3) is provided, which excess material is located external to an interior space (2d) of the frame (2), wherein a cutting process is preferably undertaken under the influence of heat, so that the detachment site at the same time is slightly melted, and as a result the fibres of the net (3) are connected with one another.

7. A device for the execution of the method in accordance with one of the Claims 1 to 6, **characterised in that**, the device, i.e. the assembly tool (6), has an upper (6b) and a lower part (6a), which can be moved relative to one another such that the two facing surfaces make contact, or nearly make contact, with one another, **in that** the lower part (6a) has a curved, rectangular, or trapezoidal locating surface (10) for the frame (2) on its surface facing towards the upper part (6b), matched to the shape of the frame (2) of the luggage net (1), and **in that** on the outer surface of the said locating surface facing away from the frame (2) a row of holding pins (11) are arranged located one behind another, which extend approximately parallel to the surface of the lower part (6a), in particular horizontal, or with their free ends pointing downwards towards the surface of the lower part (6a).

8. The device in accordance with Claim 7, with a column guide (6c), by means of which the upper part (6b) and the lower part (6a) of the fitting tool (6) can be moved towards one another.

9. The device in accordance with Claim 7 or 8, in which on the inner surface of the said, in particular curved, locating surface (10), facing towards the frame (2), a recess (8) is provided for the purpose of a form-fit accommodation of the frame (2).

10. The device in accordance with one of the Claims 7 to 9, in which approximately as many holding pins (11) on the outer surface, facing away from the frame (2) of the, in particular curved locating, surface (10) are provided as the number of net meshes (3c) of the net (3) approximately present in the said region.

11. The device in accordance with one of the Claims 7 to 10, in which ancillary pins (12) are present above the band (3e) of the net (3) on the lower part (6a) of the assembly tool (6), on which pins the band (3e) or the net meshes (3c) are threaded on in the region of the band (3e) and thereby the band (3e) is clamped.

## Revendications

1. Procédé de fabrication d'un filet de bagage (1) comportant un cadre (2) sur lequel un filet (3) est fixé par correspondance de matière (4) et qui peut être relié au moyen d'éléments de fixation (5) à une pièce conjuguée, dans lequel procédé les étapes suivantes sont suivies :
a) insertion du cadre (2) dans un profilé d'appui (10) d'une pièce inférieure (6a) d'un outil de montage (6) ;
b) pose du filet (3) sur le cadre (2) et enfilement des mailles du filet (3c) au niveau du cadre (2) sur des broches de retenue (11) sur le profilé d'appui (10) de l'outil de montage (6) ou enfilement des mailles du filet (3c) au niveau du cadre (2) sur des broches de retenue (11) sur le profilé d'appui (10) de l'outil de montage (6) et pose du filet (3) sur le cadre (2) ;
c) pose d'une pièce supérieure (6b) complétant la pièce inférieure (6a) de l'outil de montage (6) sur la pièce inférieure (6a) de manière à ce que le filet (3) et le cadre (3) soient fixés l'un à l'autre dans leur position relative ;
d) raccordement ponctuel par bandes ou continu par correspondance de matière du filet (3) et du cadre (2) le long d'un masque (14) entre la pièce supérieure (6b) et le profilé d'appui (10) de la pièce inférieure (6a) de l'outil (6) ;
e) relèvement de la pièce supérieure (6a) posée sur la pièce inférieure (6a) de l'outil de montage (6) ;
f) soulèvement du filet de bagage partiellement fini ou fini (1) hors de l'outil (6).

2. Profilé selon la revendication 1, dans lequel, dans l'étape a), le profilé d'appui (10) de la pièce inférieure (6a) de l'outil de montage (6) comportant un évidement (8) est utilisé.

3. Profilé selon la revendication 1 ou 2, dans lequel, entre les étapes a) et b) ou avant l'étape a), il est prévu une application d'un promoteur d'adhérence (primaire) sur au moins les parties de la surface du cadre (2) qui doivent être raccordées au filet (3).

4. Profilé selon une des revendications 1 à 3, dans lequel l'enfilement dans l'étape b) comprend un enfilement sur des éléments de fixation (5) se présentant sous forme de dômes (5) en forme de broches sur le cadre (2) pour fixation au véhicule, en partie à la partie intérieure du véhicule, de même qu'un enfilement sur des broches auxiliaires (12) non au niveau du cadre (2), par exemple au niveau d'un paquet supérieur (3e) de filet (3) entre des brides latérales de cadre (2b, 2c) du cadre en forme de U (2).

5. Profilé selon une des revendications 1 à 4, dans lequel, dans l'étape c), la pièce supérieure (6b) de l'outil de montage (6) est amenée dans la pièce inférieure (6a) de l'outil de montage (2) de manière à ce que le filet (3) repose au moins partiellement à plat sur la surface d'une branche intérieure de base du profilé (2e) entre deux branches latérales du profilé (2f, 2g) dans un espace intérieur du profilé (2h) ou se trouve au moins à faible distance au-dessus.

6. Profilé selon une des revendications 1 à 5, dans lequel, entre les étapes d) et e) ou après l'étape e), il est prévu un enlèvement de la matière excédentaire (3d) du filet (3) se trouvant en dehors de l'espace intérieur de cadre (2d) du cadre (2), sachant qu'on procède de préférence à une coupe sous action thermique, de sorte que le point de coupe fond en même temps facilement, ce qui raccorde les fibres du filet (3) entre elles.

7. Dispositif de réalisation du profilé selon une des revendications 1 à 6, **caractérisé en ce qu'**il comporte le dispositif, c'est-à-dire l'outil de montage (6), une pièce supérieure (6b) et une pièce inférieure (6a) qui sont déplaçables les uns vers les autres de manière à ce que les deux surfaces tournées l'une vers l'autre se touchent ou se touchent pratiquement, que la pièce inférieure (6a) présente une surface d'appui (10) en forme de courbe, de rectangle ou de trapèze adaptée à la forme du cadre (2) du filet de bagage (1) pour le cadre (2) sur sa surface tournée vers la pièce supérieure (6b) et que soient disposée sur la surface extérieure détournée du cadre (2) de cette surface d'appui une série de broches de retenue (11) placées les unes derrière les autres et qui s'étendent approximativement parallèlement à la surface de la pièce inférieure (6a), en particulier horizontalement, ou sont orientées par leur extrémité libre vers le bas en direction de la surface de la pièce inférieure (6a).

8. Dispositif selon la revendication 7, comportant une colonne de guidage (6c) à travers laquelle la pièce supérieure (6b) et la pièce inférieure (6a) de l'outil de montage (6) sont déplaçables l'une vers l'autre.

9. Dispositif selon la revendication 7 ou 8, dans lequel, sur la surface intérieure tournée vers le cadre (2) de cette surface d'appui (10) en particulier de forme courbée, il est prévu un évidement (8) destiné à recevoir le cadre (2) par correspondance géométrique.

10. Dispositif selon une des revendications 7 à 9, dans lequel il est prévu autant de broches de retenue (11) sur la surface extérieure détournée du cadre (2) de la surface d'appui (10) en particulier de forme courbée que de mailles (3c) du filet (3) dans cette zone.

11. Dispositif selon une des revendications 7 à 10, dans lequel, au-dessus du paquet (3e) de filet (3), sur la pièce inférieure (6a) de l'outil de montage (6), se trouvent des broches auxiliaires (12) sur lesquelles le paquet (3e) ou les mailles de filet (3c) sont enfilés au niveau du paquet (3e) et le paquet (3e) est ainsi serré.
